(19) Europäisches Patentamt
European Patent Office
Office européen des brevets

(11) EP 3 091 051 B1

(12) **EUROPEAN PATENT SPECIFICATION**

(45) Date of publication and mention of the grant of the patent:
**18.11.2020 Bulletin 2020/47**

(21) Application number: **14876051.5**

(22) Date of filing: **31.12.2014**

(51) Int Cl.:
***C08L 23/04*** (2006.01) ***C08L 23/06*** (2006.01)
***C08L 59/02*** (2006.01) ***C08L 59/04*** (2006.01)
***C08K 3/22*** (2006.01) ***C08K 5/103*** (2006.01)
***C08K 7/22*** (2006.01)

(86) International application number:
**PCT/KR2014/013100**

(87) International publication number:
**WO 2015/102405 (09.07.2015 Gazette 2015/27)**

(54) **POLYOXYMETHYLENE RESIN COMPOSITION AND MOLDED ARTICLE CONTAINING SAME**

POLYOXYMETHYLENHARZZUSAMMENSETZUNG UND GEFORMTER ARTIKEL DAMIT

COMPOSITION DE RÉSINE POLYACÉTAL ET ARTICLE MOULÉ LA CONTENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2013 KR 20130168006**
**30.12.2014 KR 20140194416**

(43) Date of publication of application:
**09.11.2016 Bulletin 2016/45**

(73) Proprietor: **Kolon Plastics, Inc.**
**Gimcheon-si, Gyeongsangbuk-do 740-180 (KR)**

(72) Inventors:
- **KANG, Kyung Min**
  **Gimcheon-si**
  **Gyeongsangbuk-do 740-180 (KR)**
- **SHIN, Bum Shik**
  **Gimcheon-si**
  **Gyeongsangbuk-do 740-180 (KR)**
- **PARK, Eun Ha**
  **Gimcheon-si**
  **Gyeongsangbuk-do 740-180 (KR)**

(74) Representative: **Ter Meer Steinmeister & Partner Patentanwälte mbB**
**Nymphenburger Straße 4**
**80335 München (DE)**

(56) References cited:
**EP-A1- 2 098 569**
**JP-B2- 5 008 256**
**JP-B2- 5 301 794**
**KR-A- 20060 047 234**
**KR-A- 20120 078 475**
**KR-A- 20120 078 475**
**KR-B1- 100 773 583**
**KR-B1- 101 154 490**

EP 3 091 051 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a polyoxymethylene resin composition and a molded product including the same.

### Background Art

Polyoxymethylene resin is high-performance plastic having balanced mechanical strength and impact resistance, and has been widely utilized as parts for electronic devices and vehicles.
However, polyoxymethylene resin may easily decompose in a heat oxidation atmosphere or under acidic or alkaline conditions, and may leave deposits in the mold upon long-term injection molding thereof.
With the goal of solving such problems related to thermal stability and mold deposit resistance, methods of increasing mold deposit resistance by stabilizing a chemically active end and adding a mold releasing agent are known. In this case, however, while formaldehyde gas and polysaccharides are generated upon molding or extrusion, a Formose reaction begins to occur, undesirably causing discoloration to a yellowish brown color and the formation of mold deposits.
To solve such problems, Japanese Patent Publication No. Sho. 55-22508 discloses a polyoxymethylene resin composition, which includes hindered phenol and a fatty acid alkaline earth metal salt having 10 to 20 carbon atoms and/or alkaline earth metal hydroxide to increase the thermal stability of the polyoxymethylene resin, whereby the polyoxymethylene resin composition is stable in oxidation and pyrolysis, and Japanese Patent Publication No. Sho. 60-56784 discloses a polyoxymethylene resin composition containing a polyoxymethylene resin, hindered phenol, and a fatty acid alkaline earth metal salt having 22 to 36 carbon atoms, thus exhibiting stability to oxidation and pyrolysis and inhibiting discoloration.
Japanese Patent Application Publication No. Hei. 3-14857 discloses a composition comprising a hindered amine compound, a hindered phenol antioxidant having a molecular weight of 400 or more and a metal carboxylate having 12 or more carbon atoms, Japanese Patent Application Publication No. Sho. 62-45662 discloses a composition comprising a fatty acid and a phosphate, and Japanese Patent Application Publication No. Hei. 11-29692 discloses a composition comprising a fatty acid, a phosphate, carbon black, and at least one thermal stabilizer selected from the group consisting of a quinoline compound, an amide compound and an amine compound. Japanese Patent Publication No. Sho. 34-5440 discloses a polyoxymethylene resin composition comprising a polyamide resin, which has high thermal stability at high temperature for a long period of time but undergoes discoloration to a yellowish brown color due to the action with generated formaldehyde and oxygen.
Also, Japanese Patent Application Publication No. Hei. 10-251481 discloses a composition comprising a polyoxymethylene resin, calcium phosphate, and a thermal stabilizer such as a hindered phenol antioxidant, or a light stabilizer such as a benzotriazole material, a hydroxyanilide material, and a hindered amine material.
Japanese Patent Publication No. Sho. 62-4422 discloses a polyoxymethylene resin composition comprising a polyoxymethylene resin, polyamide, and at least one selected from the group consisting of a fatty acid having 12 to 35 carbon atoms, a fatty acid calcium salt having 12 to 35 carbon atoms, and calcium or magnesium salts of aliphatic alcohols having 12 to 36 carbon atoms, thus exhibiting high thermal stability and low mold deposit formation upon molding, and Japanese Patent Publication No. Sho. 62-58387 discloses a polyoxymethylene resin composition comprising a polyoxymethylene resin, an amine-substituted triazine compound, hindered phenol, alkali metal or alkaline earth metal hydroxide, an inorganic acid salt, a carboxylate, or alkoxide, thus exhibiting high thermal stability.
In order to increase both mold deposit resistance and flowability, Japanese Patent Application Publication No. Hei. 4-239566 discloses a method of adding a liquid ethylene·$\alpha$-olefinic polymer, which has low dispersibility in an additive and a polyacetal resin, undesirably causing layer separation in injection-molded products and extruded products.
However, the polyoxymethylene resin composition in which such a stabilizer is appropriately combined is problematic because the end or main chain of the polymer is decomposed due to the action of heat or oxygen in the cylinder of a molding machine upon molding and extrusion, and it is difficult to completely prevent the generation of formaldehyde gas and reduce the formation of deposits in the mold.
During the stabilization of the end group, formaldehyde is oxidized to produce formic acid, the main chain may be decomposed due to frictional heat, and the stabilizer may react with formaldehyde, undesirably discoloring the molded product and easily generating deposits in the mold. The polyoxymethylene resin composition having such a stabilizer is disadvantageous in terms of increasing thermal stability, and inhibiting discoloration upon molding and extrusion and also reducing the generation of deposits in the mold. In particular, discoloration may be caused after aging at high temperature for stress relief and crystallization after extrusion, undesirably decreasing the product value. Hence, molded and extruded products in which the above problems are solved are strongly required.

**Disclosure**

**Technical Problem**

Therefore, the present invention is intended to provide a polyoxymethylene resin composition, in which the inherent superior mechanical strength and impact resistance of polyoxymethylene resin are maintained, and high thermal stability and increased mold deposit resistance of molded products may result.

In addition, the present invention is intended to provide a molded product including the polyoxymethylene resin composition.

**Technical Solution**

A preferred first embodiment of the present invention provides a polyoxymethylene resin composition, comprising: a polyoxymethylene resin; and, based on 100 parts by weight of the polyoxymethylene resin, 0.01 to 0.5 parts by weight of alkaline earth metal hydroxide, 0.01 to 1 parts by weight of porous organic/inorganic hybrid silicate, 0.01 to 1 parts by weight of LDPE (Low Density Polyethylene), and 0.02 to 0.5 parts by weight of polyhydric alcohol fatty acid ester.

In this embodiment, the porous organic/inorganic hybrid silicate may have a pore size of 50 nm or less and a surface area of 200 to 2000 $m^2/g$.

In this embodiment, the LDPE may have a density of 0.910 to 0.940 $g/cm^3$.

In this embodiment, the polyhydric alcohol fatty acid ester may have a weight average molecular weight ranging from 300 to 1000.

In this embodiment, the polyoxymethylene resin composition may have, after aging at 200°C for 3 hr, a delta yellow index ($\Delta$YI) of 3 or less, and a mold deposit (MD) resistance of 500 or more.

A preferred second embodiment of the present invention provides a molded product, comprising the above polyoxymethylene resin composition.

**Advantageous Effects**

According to the present invention, a polyoxymethylene resin composition can exhibit improved thermal stability and discoloration resistance after aging while retaining the inherent superior mechanical strength and impact resistance of polyoxymethylene resin, and a molded product including the polyoxymethylene resin composition can exhibit low discoloration and low mold deposit (MD), and is thus applied to interior and exterior materials of vehicles, precision electrical and electronic products, and living goods.

**Best Mode**

In the present invention, a weight average molecular weight is defined as a value measured through GPC (Gel Permeation Chromatography) under the following conditions.

(1) Solvent: HFIP (hexafluoroisopropanol) + 0.02 N trifluoroacetic acid Na salt (TFAcNa)
(2) Column (maker, model no.): PL HFIP gel
(3) Temperature: 35°C
(4) Detector: Waters RI 410 detector
(5) Flowing speed: 0.8 mL/min, Waters 515 pump
(6) Data system: multichro ver. 5.0
(7) Injection amount: 100 L, Concentration: 5mg / mL
(8) Standard sample: polymethylmethacrylate, Polymer Laboratories Co.

Hereinafter, a detailed description will be given of the present invention.

The present invention addresses a polyoxymethylene resin composition, comprising: a polyoxymethylene resin; and, based on 100 parts by weight of the polyoxymethylene resin, 0.01 to 0.5 parts by weight of alkaline earth metal hydroxide, 0.01 to 1 parts by weight of porous organic/inorganic hybrid silicate, 0.01 to 1 parts by weight of LDPE (Low Density Polyethylene), and 0.02 to 0.5 parts by weight of polyhydric alcohol fatty acid ester.

**[Polyoxymethylene resin]**

In the present invention, a polyoxymethylene resin may be represented by Chemical Formula 1 below.

[Chemical Formula 1]

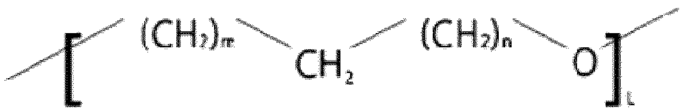

In Chemical Formula 1, m and n are each an integer from 1 to 20, and L is an integer from 2 to 100.

The polyoxymethylene resin may have a weight average molecular weight ranging from 500 to 5000 taking into consideration injectability and extrudability.

**[Alkaline earth metal hydroxide]**

In the present invention, an alkaline earth metal hydroxide functions to decompose quasi-stable and unstable ends of polyoxymethylene (POM) through a Cannizzaro reaction so as to reduce the generation of formaldehyde upon secondary processing, and to increase the stability of color and resistance to heat. As such, the alkaline earth metal may be calcium or magnesium. The alkaline earth metal hydroxide may be specifically calcium hydroxide ($Ca(OH)_2$).

The amount of the alkaline earth metal hydroxide may be 0.01 to 0.5 parts by weight based on 100 parts by weight of the polyoxymethylene resin. If the amount of the alkaline earth metal hydroxide is less than 0.01 parts by weight, the unstable end may not be sufficiently decomposed, undesirably generating formaldehyde gas in the subsequent injection process. On the other hand, if the amount thereof exceeds 0.5 parts by weight, the polymer may be decomposed, undesirably deteriorating properties or discoloring the polymer.

**[Porous organic/inorganic hybrid silicate]**

In the present invention, the porous organic/inorganic hybrid silicate may function to increase thermal stability, prevent discoloration upon molding or extrusion, and minimize discoloration after aging for a long period of time for stress relief and crystallization after extrusion molding.

The porous organic/inorganic hybrid silicate may be prepared in a manner in which 60 to 98 wt% of a silica precursor and 2 to 40 wt% of organosilane are hydrolyzed in the presence of a surfactant, dehydrated, and washed. The silica precursor may include at least one selected from the group consisting of alkoxysilyl alkylene having 4 or more alkoxy groups, tetraalkyl orthosilicate, and alkoxysilyl alkane having 4 or more alkoxy groups, and the organosilane may include at least one selected from the group consisting of alkoxysilane having 1 to 3 alkoxy groups, alkoxyalkenyl silane, alkoxyaryl silane, and alkoxyaralkyl silane.

The porous organic/inorganic hybrid silicate has a pore size of 50 nm or less and a surface area of 200 to 2000 $m^2/g$, thus capturing low-molecular-weight materials such as formic acid and volatile organic compounds (VOCs) due to such a pore size and surface area so as to remove the discoloration-causing material.

The amount of the porous organic/inorganic hybrid silicate may be 0.001 to 1 parts by weight based on 100 parts by weight of the polyoxymethylene resin. If the amount of the porous organic/inorganic hybrid silicate is less than 0.001 parts by weight, the adsorption of VOCs may decrease. On the other hand, if the amount thereof exceeds 1 part by weight, the bondability between the end group of the polyoxymethylene resin and the resin may become weak, undesirably causing decomposition, thereby discharging gas and incurring foaming, resulting in deteriorated stability in the preparation process.

**[LDPE]**

In the present invention, LDPE may have a density of 0.910 to 0.940 $g/cm^3$, taking into consideration the dispersibility of an inorganic material.

The amount of LDPE may be 0.02 to 1 parts by weight based on 100 parts by weight of the polyoxymethylene resin. If the amount of LDPE is less than 0.02 parts by weight, flowability may decrease upon melting, or mold deposit resistance may also decrease. On the other hand, if the amount thereof exceeds 1 part by weight, the properties of the polyoxymethylene resin may deteriorate.

**[Polyhydric alcohol fatty acid ester]**

In the present invention, polyhydric alcohol fatty acid ester may improve flowability upon extrusion and mold deposit resistance upon injection.

Taking into consideration injectability and extrudability, the polyhydric alcohol fatty acid ester may have a weight average molecular weight ranging from 300 to 1000. If the weight average molecular weight thereof is excessively increased, compatibility may decrease, and improvements in flowability, lubricability and mold deposit resistance may become insignificant.

The polyhydric alcohol fatty acid ester may include at least one selected from the group consisting of glycerol monostearate, glycerol monobehenate, and glycerol monomontanate.

The amount of the polyhydric alcohol fatty acid ester may be 0.02 to 0.5 parts by weight based on 100 parts by weight of the polyoxymethylene resin. If the amount of the polyhydric alcohol fatty acid ester is less than 0.02 parts by weight, flowability may decrease upon melting. On the other hand, if the amount thereof exceeds 0.5 parts by weight, flowability may become excessively high upon melting, and thus stability may be rather lowered, and undesirably a large amount of formaldehyde may be left behind.

**[Preparation method]**

In the present invention, the polyoxymethylene resin composition may be prepared by mixing a polyoxymethylene resin, an alkaline earth metal hydroxide, a porous organic/inorganic hybrid silicate, LDPE (Low Density Polyethylene) and a polyhydric alcohol fatty acid ester, and melting the resulting mixture at a temperature of 240 to 250°C using a uniaxial or biaxial extruder.

According to the present invention, the polyoxymethylene resin composition may have, after aging at 200°C for 3 hr, a delta yellow index (ΔYI) of 3 or less, and a mold deposit resistance of 500 or more. Such a polyoxymethylene resin composition may be utilized for vehicles or electrical and electronic parts.

**Mode for Invention**

A better understanding of the present invention may be obtained through the following examples and comparative examples which are set forth to illustrate, but are not to be construed to limit the scope of the present invention, as will be apparent to those skilled in the art.

**Example 1**

Individual components in the amounts shown in Table 1 below were melt kneaded using a biaxial extruder heated to 240°C to make chips, which were then dried using a dehumidifier at 90°C for 5 hr, and then treated at the same temperature as the melt kneading process using a heated screw injector, thus preparing a sample.

Specifically, as shown in Table 1 below, a polyoxymethylene resin composition was prepared in a manner in which a polyoxymethylene resin, alkaline earth metal hydroxide, porous organic/inorganic hybrid silicate, LDPE (Low Density Polyethylene) and polyhydric alcohol fatty acid ester were melt kneaded using a biaxial extruder heated to 240°C and chips for a polyoxymethylene resin composition were then made, dried using a dehumidifier at 90°C for 5 hr, and prepared into a sample at the same temperature as the melt kneading process using a heated screw injector.

**Examples 2 and 3**

Polyoxymethylene resin compositions were prepared in the same manner as in Example 1, with the exception that the amount of the alkaline earth metal hydroxide was changed.

**Examples 4 and 5**

Polyoxymethylene resin compositions were prepared in the same manner as in Example 1, with the exception that the amount of the porous organic/inorganic hybrid silicate was changed.

**Examples 6 and 7**

Polyoxymethylene resin compositions were prepared in the same manner as in Example 1, with the exception that the amount of the LDPE was changed.

**Examples 8 and 9**

Polyoxymethylene resin compositions were prepared in the same manner as in Example 1, with the exception that the amount of the polyhydric alcohol fatty acid ester was changed.

**Comparative Examples 1 and 2**

Polyoxymethylene resin compositions were prepared in the same manner as in Example 1, with the exception that the amount of the alkaline earth metal hydroxide was changed.

**Comparative Examples 3 and 4**

Polyoxymethylene resin compositions were prepared in the same manner as in Example 1, with the exception that the amount of the porous organic/inorganic hybrid silicate was changed.

**Comparative Examples 5 and 6**

Polyoxymethylene resin compositions were prepared in the same manner as in Example 1, with the exception that the amount of the LDPE was changed.

**Comparative Examples 7 and 8**

Polyoxymethylene resin compositions were prepared in the same manner as in Example 1, with the exception that the amount of the polyhydric alcohol fatty acid ester was changed.

**<Measurement>**

The polyoxymethylene resin composition samples of Examples and Comparative Examples were measured for tensile strength, impact strength, tensile strength maintenance, impact strength maintenance, flame resistance, and surface properties through the following methods. The results are shown in Table 2 below.

- Delta YI ($\Delta YI^*_{ab}$, Measurement of Yellow Index of two samples): Respective polyoxymethylene resin compositions were allowed to reside in an electric oven at 200°C for 30 min and 3 hr. The YI values of respective plates were measured using a color meter and substituted into the following Equation 1.

$$\text{(Equation 1)}\quad \Delta YI^* = YI^*_t - YI^*$$

In this equation, $YI^*_t$ is the YI value of the sample after aging for 30 min and YI* is the YI value of the sample after aging for 3 hr.

- YI (Yellow Index): The value was determined to the second decimal place using Equation 2 below.

$$\text{(Equation 2)}\quad YI = 100\ (1.28X - 1.06Z)/Y$$

In this equation, X, Y and Z are tristimulus values of test specimens and samples for standard light C. As such, standard light C indicates light showing the daylight with a correlated color temperature of 6,744 K, as a standard light source.

- Formaldehyde (FA): The amount of FA gas discharged after aging of 10 g of polyoxymethylene resin (Chip) at 140°C for 30 min was measured using GC (Gas Chromatography).
- Mold Deposit (MD) resistance: A dumbbell test specimen was injected under conditions of a cylinder temperature (240°C/240°C/240°C/190°C) of an injection molding machine and a hot runner temperature of 250°C, and whether gas or deposits were left in the mold was observed with the naked eye every 50 injection cycles in the initial stage, and every 100 injection cycles after 300 shots or more, and the number of shots at which deposits were observed was measured. The higher the number of shots, the better the mold deposit resistance.

[Table 1]

| Parts by weight | Polyoxymethylene resin | Alkaline earth metal hydroxide | Porous organic/ inorganic hybrid silicate | LDPE | Polyhydric alcohol fatty acid ester |
|---|---|---|---|---|---|
| | K300, Kolon Plastic | Calcium hydroxide, Rheinchemie | TS1, Taesung Environment Institute | BF500, LG Chemical | Glycerol monobehenate, Kao Corporation |
| Ex. 1 | 100 | 0.3 | 0.5 | 0.5 | 0.3 |
| Ex. 2 | 100 | 0.01 | 0.5 | 0.5 | 0.3 |
| Ex. 3 | 100 | 0.5 | 0.5 | 0.5 | 0.3 |
| Ex. 4 | 100 | 0.3 | 0.01 | 0.5 | 0.3 |
| Ex. 5 | 100 | 0.3 | 1 | 0.5 | 0.3 |
| Ex. 6 | 100 | 0.3 | 0.5 | 0.01 | 0.3 |
| Ex. 7 | 100 | 0.3 | 0.5 | 1 | 0.3 |
| Ex. 8 | 100 | 0.3 | 0.5 | 0.5 | 0.02 |
| Ex. 9 | 100 | 0.3 | 0.5 | 0.5 | 0.5 |
| C.Ex.1 | 100 | 0.008 | 0.5 | 0.5 | 0.3 |
| C.Ex.2 | 100 | 0.52 | 0.5 | 0.5 | 0.3 |
| C.Ex.3 | 100 | 0.3 | 0.008 | 0.5 | 0.3 |
| C.Ex.4 | 100 | 0.3 | 1.2 | 0.5 | 0.3 |
| C.Ex.5 | 100 | 0.3 | 0.5 | 0.008 | 0.3 |
| C.Ex.6 | 100 | 0.3 | 0.5 | 1.2 | 0.3 |
| C.Ex.7 | 100 | 0.3 | 0.5 | 0.5 | 0.01 |
| C.Ex.8 | 100 | 0.3 | 0.5 | 0.5 | 0.52 |

[Table 2]

| | Delta YI | YI | FA (ppm) | MD resistance (shots) |
|---|---|---|---|---|
| Ex. 1 | 2.4 | -4.51 | 15.5 | 1000 |
| Ex. 2 | 2.7 | -6.53 | 21.6 | 800 |
| Ex. 3 | 2.3 | -4.13 | 23.8 | 700 |
| Ex. 4 | 2.4 | -5.12 | 17.2 | 1100 |
| Ex. 5 | 2.1 | -6.21 | 20.5 | 600 |
| Ex. 6 | 2.3 | -4.92 | 8.9 | 600 |
| Ex. 7 | 2.7 | -4.81 | 16.2 | 700 |
| Ex. 3 | 2.3 | -4.74 | 22.4 | 600 |
| Ex. 9 | 2.3 | -3.78 | 9.2 | 700 |
| C.Ex.1 | 2.6 | -5.15 | 120.2 | 150 |
| C.Ex.2 | 3.5 | -3.56 | 92.8 | 100 |
| C.Ex.3 | 4.2 | -4.87 | 51.2 | 400 |
| C.Ex.4 | 1.9 | -6.12 | 51.4 | 100 |

(continued)

| | Delta YI | YI | FA (ppm) | MD resistance (shots) |
|---|---|---|---|---|
| C.Ex.5 | 2.5 | -4.43 | 62.1 | 200 |
| C.Ex.6 | 2.6 | -4.51 | 74.2 | 300 |
| C.Ex.7 | 2.3 | -5.12 | 14.6 | 300 |
| C.Ex.8 | 5.1 | -2.51 | 65.7 | 400 |

Based on the results of measurement of the properties, as shown in FIG. 2, in the case where the amount of alkaline earth metal hydroxide was less than an appropriate level, as in Comparative Example 1, the amount of generated FA was increased, and poor MD resistance resulted. On the other hand, in the case where the amount of alkaline earth metal hydroxide exceeded an appropriate level, as in Comparative Example 2, the delta YI value was increased and thus discoloration was easily caused, and furthermore, the amount of generated FA was increased and poor MD resistance resulted.

Also, in the case where the amount of porous organic/inorganic hybrid silicate was less than an appropriate level, as in Comparative Example 3, the delta YI value was increased and thus discoloration was easily caused, and furthermore, the amount of generated FA was increased and poor MD resistance resulted. Also, in the case where the amount of porous organic/inorganic hybrid silicate was greater than an appropriate level, as in Comparative Example 4, the amount of generated FA was increased and poor MD resistance resulted.

As in Comparative Examples 5 and 6, when the amount of LDPE was less than or greater than an appropriate level, the amount of generated FA was increased and poor MD resistance resulted.

As in Comparative Example 7, when the amount of polyhydric alcohol fatty acid ester was less than an appropriate level, poor MD resistance resulted. Furthermore, when the amount of polyhydric alcohol fatty acid ester was greater than an appropriate level, as in Comparative Example 8, the delta YI value was increased, whereby discoloration was easily caused, the amount of generated FA was increased, and poor MD resistance resulted.

However, the polyoxymethylene resin compositions prepared in Examples had a delta YI of 3 or less and MD resistance of 500 or more, and the concern over discoloration was low, good mold deposit resistance resulted, and the amount of generated FA was low. Therefore, the polyoxymethylene resin composition according to the present invention can be applied to interior and exterior materials of vehicles, precision electrical and electronic products, and living goods.

Although specific embodiments of the present invention have been disclosed in detail as described above, it is obvious to those skilled in the art that such description is merely of preferable exemplary embodiments and is not construed to limit the scope of the present invention. Therefore, the substantial scope of the present invention will be defined by the appended claims.

## Claims

1. A polyoxymethylene resin composition, comprising:
   a polyoxymethylene resin; and, based on 100 parts by weight of the polyoxymethylene resin, 0.01 to 0.5 parts by weight of an alkaline earth metal hydroxide, 0.01 to 1 parts by weight of a porous organic/inorganic hybrid silicate, 0.01 to 1 parts by weight of LDPE (Low Density Polyethylene), and 0.02 to 0.5 parts by weight of a polyhydric alcohol fatty acid ester.

2. The polyoxymethylene resin composition of claim 1, wherein the LDPE has a density of 0.910 to 0.940 g/cm$^3$.

3. The polyoxymethylene resin composition of claim 1, wherein the polyhydric alcohol fatty acid ester has a weight average molecular weight ranging from 300 to 1000.

4. The polyoxymethylene resin composition of claim 1, having, after aging at 200°C for 3 hr, a delta yellow index (ΔYI) of 3 or less, and a mold deposit (MD) resistance of 500 or more.

5. A molded product, comprising the polyoxymethylene resin composition of any one of claims 1 to 4.

## Patentansprüche

1. Polyoxymethylenharzzusammensetzung, umfassend:
ein Polyoxymethylenharz; und, basierend auf 100 Gewichtsteilen des Polyoxymethylenharzes, 0,01 bis 0,5 Gewichtsteile eines Erdalkalimetallhydroxids, 0,01 bis 1 Gewichtsteile eines porösen organischen/anorganischen Hybridsilicats, 0,01 bis 1 Gewichtsteile LDPE (Low Density Polyethylen), und 0,02 bis 0,5 Gewichtsteile eines mehrwertigen Alkohol-Fettsäureesters.

2. Polyoxymethylenharzzusammensetzung nach Anspruch 1, wobei das LDPE eine Dichte von 0,910 bis 0,940 g/cm$^3$ aufweist.

3. Polyoxymethylenharzzusammensetzung nach Anspruch 1, wobei der mehrwertige Alkohol-Fettsäureester ein gewichtsmittleres Molekulargewicht im Bereich von 300 bis 1.000 aufweist.

4. Polyoxymethylenharzzusammensetzung nach Anspruch 1, die, nach Alterung bei 200 °C während 3 Stunden, einen delta-Gelbindex (ΔYI) von 3 oder weniger und eine Molddepo-sit(MD)-Beständigkeit von 500 oder mehr aufweist.

5. Formprodukt, umfassend die Polyoxymethylenharzzusammensetzung nach irgendeinem der Ansprüche 1 bis 4.

## Revendications

1. Composition de résine de polyoxyméthylène, comprenant :

   une résine de polyoxyméthylène ; et,
   sur la base de 100 parties en poids de résine de polyoxyméthylène, de 0,01 à 0,5 partie en poids d'un hydroxyde de métal alcalino-terreux, de 0,01 à 1 partie en poids d'un silicate hybride organique / inorganique poreux, de 0,01 à 1 partie en poids de LDPE (polyéthylène à basse densité), et 0,02 à 0,5 partie en poids d'un ester d'acide gras et d'alcool polyhydrique.

2. Composition de résine de polyoxyméthylène selon la revendication 1, dans laquelle le LDPE a une densité de 0,910 à 0,940 g / cm$^3$.

3. Composition de résine de polyoxyméthylène selon la revendication 1, dans laquelle l'ester d'acide gras d'alcool polyhydrique a un poids moléculaire moyen en poids allant de 300 à 1 000.

4. Composition de résine de polyoxyméthylène selon la revendication 1, ayant, après vieillissement à 200 °C pendant 3 heures, un indice de jaune delta (ΔYI) de 3 ou moins, et une résistance au dépôt de moule (MD) de 500 ou plus.

5. Produit moulé, comprenant la composition de résine de polyoxyméthylène selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO5522508 B
- JP SHO6056784 B
- JP HEI314857 B
- JP SHO6245662 B
- JP HEI1129692 B
- JP SHO345440 B
- JP HEI10251481 B
- JP SHO624422 B
- JP SHO6258387 B
- JP HEI4239566 B